# EUROPEAN PATENT SPECIFICATION

(11) **EP 0 623 888 B1**
(45) Date of publication and mention of the grant of the patent: **24.09.1997**
(21) Application number: 93201317.0
(22) Date of filing: 07.05.1993
(51) Int. Cl.: G06K 7/10

(54) **Beam steering device**
Vorrichtung zur Strahlablenkung
Dispositif d'orientation de faisceau

(43) Date of publication of application: 09.11.1994
(73) Proprietor: OPTICON SENSORS EUROPE B.V., 2132 NG Hoofddorp (NL)
(72) Inventor: Peng, Ke-Ou, NL-2612 KV Delft (NL)
(74) Representative: Tribe, Thomas Geoffrey

(56) References cited:
- EP-A- 0 344 882
- EP-A- 0 456 095
- CA-A- 2 080 784
- GB-A- 2 175 705
- GB-A- 2 175 705
- US-A- 4 538 880
- US-A- 5 003 164

## Description

The present invention relates to a beam steering device, in particular an optical beam steering device for use in bar code readers, comprising a reflector movably mounted in a frame assembly by means of support members, and drive means for providing a oscillatory movement of the reflector relative to the frame assembly about a first axis and a second axis. The present invention further relates to a bar code reader comprising a beam steering device.

In bar code readers or scanners, a beam steering or image moving device is used to scan and read the bar code without the necessity to move the reader relative to the code. To this end, in active readers a (laser) beam is moved across the bars of the code by the beam steering device, while in passive scanners the beam steering device directs the image of the code towards a detector in a scanning movement.

Preferably bar codes are situated at an arbitrary orientation and an arbitrary position relative to a bar code reader. A multiple-directional scanning is required such that a laser scanning point of a laser beam can pass over a bar code, at least one time.

A laser beam is used in most existing multiple-directional bar code readers. The laser beam originating from a rotating mirror or polygon is scanning a mirror array. The beam reflected from this mirror array forms a multi-directional pattern in a bar code reading plane. The scanner in such a bar code reader design is relatively large because of the mirror array. Furthermore, in general, the chance to correctly detect a bar code in the central part of the reading plane, where the bar code reader is mostly used automatically, will change if the reading distance is varied. In other words, the scanning pattern is space-variant.

To solve this problem, two rotating mirror or optical wedges may be used to generate two-dimensional space-invariant patterns. However, two motors or additional mechanical components will have to be used to rotate these mirrors or optical wedges with different speed.

A beam steering device as defined in the preamble is disclosed in GB-A-2.175.705. This known device comprises a reflector, an inner frame, an outer frame, and support members connecting the reflector and the frames, all formed integrally in single crystal material, such as silicon, by e.g. selective etching. In order to allow a movement of the reflector relative to the frames and of the inner frame relative to the outer frame, the support members are configured as relatively thin strands of single crystal material connecting the respective parts of the structure, thus enabling a torsional relative movement of the parts connected by the respective support members. This known device may further comprise drive means for steering the reflector, e.g. for providing an oscillation thereof in order to produce a raster scan. The structure of the drive means is only cursorily discussed.

Although this known beam steering device allows a light beam to be deflected over a range of angles without requiring a separate motor, it has several disadvantages which make it less suitable for use in bar code readers. Due to the integral structure the relative movement of the reflector is exclusively made possible by, and therefore limited by, the torsional properties of the relatively thin strands of material constituting the support members. As the support members are fixedly, i.e. not hingedly, attached to the various other parts of the single structure, the angle over which the position of the reflector can be varied is necessarily limited. Also, the mechanical stiffness of the structure makes control of the desired movement difficult. Therefore, it is also difficult to control the scanning pattern. Furthermore, the repeated torsion of these silicon support members may cause the material to deteriorate and age relatively quickly, thus shortening the service life of the device. Especially when the device is subjected to an oscillatory driving force, as is often the case in bar code readers, the relatively fragile silicon support members may deteriorate quickly. Moreover, as the dimensions of these known support members are critical with respect to torsional forces and oscillation frequency of the reflector, manufacturing tolerances must be accurately met, thus making the manufacture of this known device relatively expensive. In other words, this known device is not well suited for repeated and/or continuous use in a bar code reader.

It is therefore an object of the present invention to provide a small and light-weight beam steering device for use in a bar code reader which is reliable, relatively inexpensive to manufacture and which allows a bar code to be read at an arbitrary orientation and position with high reading probability.

In accordance with the above object the present invention therefore provides a device according to claim 1.

By providing a beam steering structure constituted by separate parts rather than a single part it is possible to choose for each part the optimum material for that part. In the case of the support members this means that they can be made of e.g. metal of plastic rather than silicon. Contrary to the single silicon structure mentioned above it is in the device according to the present invention also possible to provide hinging connections between the respective parts of the structure, thus allowing a relative movement of the parts of the structure without imposing torsional deformations on the support members or on other members of the structure. In this way the reliability of the structure can be greatly improved, thus extending the service life of a bar code reader provided with such a beam steering device. Furthermore, since the mechanical stiffness may be substantially reduced, control of the reflector movement and thus of the generated beam pattern is improved.

The magnet drive unit may be part of an electromagnetic driving pair each comprising a coil and a magnet. Then, a reliable and inexpensive drive means is provided. As the rotational angle of the reflector and therefore the required travel of the drive units is relatively small, the drive units may have small dimensions and can be light-weight.

By substantially aligning the drive units with the axes about which the reflector is to rotate (oscillate), an efficient relative acceleration of the axes is achieved, the drive units exerting their accelerative forces directly on the respective rotational axes. It will be understood that a perfect alignment of the drive units with the respective axes is not required for achieving this effect. Preferably, the rotational axes are mutually perpendicular, thus providing orthogonal oscillations. It is however also possible to arrange the axes under an angle which is not right, for example 60°, 80° or 110°, or any other suitable angle.

The frame assembly provides the required rotational degrees of freedom for the reflector. According to a first embodiment of the invention, the frame assembly is constituted by an inner frame and an outer frame, the inner frame being movably connected to the reflector by first support members and to the outer frame by second support members so as to allow the inner frame to move relative to the outer frame and the reflector, the first support members being substantially aligned with the first axis and the second support members being substantially aligned with the second axis. This embodiment provides a great flexibility with regard to the movement of the reflector. The number of parts of the inventive beam steering device can however be reduced, thus reducing the costs and the weight of the assembly.

According to a second embodiment of the invention, the frame assembly is constituted by a single frame. With a proper choice of the number and locations of the support members, as will be apparent from the description below, the freedom of movement of this simplified second embodiment can be as great as that of the first embodiment.

The support members may be constituted by elastic elements. Alternatively, the support members may be constituted by pivotal elements, such as micro ball bearings, allowing at least a rotational movement about the longitudinal axis of each element. Pivotal elements may be used when the frame assembly comprises an inner frame and an outer frame. Elastic elements are particularly suitable when the frame is constituted by a single part. By combining the two kinds of support members, both a translational and a rotational movement may be achieved.

The reflector may have various shapes, such as round, triangular, octagonal, etc. but is preferably substantially rectangular, e.g. square. A support element may be connected to each side of the reflector approximately in the middle thereof, but may also be connected to two opposite corners of the reflector. In the latter case, only two rather than four (or three, in the case of a triangle) support members are needed, thus achieving a further reduction in the number of parts.

The beam steering device according to the invention advantageously comprises a control device for producing suitable excitation currents for the drive units. Preferably, the control device produces such excitation currents that the driving movement of one of each pair of drive units is opposite to that of the other of that pair, thus providing an oscillatory movement of the reflector.

An active bar code reader comprising a beam steering device according to the invention preferably comprises a laser source for producing a laser beam, and a focusing means for focusing the laser beam, the beam steering device being arranged for steering said laser beam towards a bar code and for reflecting the laser beam backscattered by the bar code towards a detector via a deflector.

A passive bar code reader comprising a beam steering device according to the invention preferably comprises a first focusing means for focusing light backscattered by a bar code, the beam steering device being arranged for steering the light towards a detector located behind a small opening in an opaque screen. In order to operate the reader independently of the ambient light, it advantageously further comprises a light source.

The invention will further be explained with reference to the accompanying drawings, in which:
Figure 1 shows in perspective a first embodiment of the present invention.
Figure 2 shows, in partial side view, the inventive beam steering device of figure 1.
Figure 3 shows in perspective a second embodiment of the beam steering device of the present invention.
Figure 4 shows, in side view, a third embodiment of the beam steering device of the present invention.
Figures 5a and 5b show scanning patterns which may be realized by the beam steering device of the present invention.
Figure 6 shows schematically and in perspective an active bar code reader according to the present invention.
Figure 7 shows schematically and in perspective a passive bar code reader according to the present invention.
Figure 8 shows an alternative embodiment of the invention.

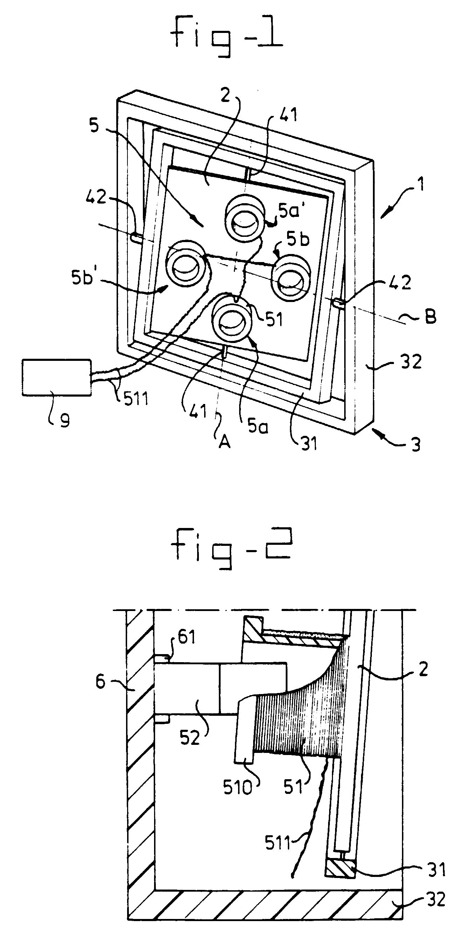

The beam steering device 1 shown in figure 1 comprises a reflector 2 mounted in a frame assembly 3. The frame assembly 3 shown in figure 1 comprises an inner frame 31 and an outer frame 32. First support members 41 rotatably connect the reflector 2 to the inner frame 31, while second support members 42 rotatably connect the inner frame 31 to the outer frame 32. The first support members 41 provide a first rotational axis, denoted by A, while the second support members 42 provide a second rotational axis, denoted by B. Preferably, the support members 41, 42 are spindles. However, they may be made of elastic material, such as a spring. In the embodiment shown in figure 1 the axes A and B are perpendicular, but this is not essential to the present invention. A drive means, generally denoted by 5, is mounted on the back of the reflector 2. The drive means 5 is constituted by four drive units 5a, 5a', 5b, 5b', the first pair of drive units 5a, 5a' being substantially aligned with the first axis A and the second pair of drive units 5b, 5b' being substantially aligned with the second axis B. Each drive unit comprises a coil 51 which cooperates with a magnet 52 (not shown in figure 1), providing an essentially translational movement in the longitudinal direction of each unit. As will be understood from figure 1, the first pair of drive units 5a, 5a', being aligned with the first axis A, in combination provide a rotation about the second axis B. In practice a rotation of only a few degrees about each axis suffices to provide the desired beam steering effect. For this reason, the range of travel of each drive unit, as well the dimensions and weight of the unit itself, can be small. Although drive means 5a,a' are attached to the back of reflector 2 in figure 1, it is possible to attach them to the inner frame 31.

Although in the embodiment described above, as in further embodiments described further below, each drive unit has been described as an active unit comprising a coil and a magnet it is possible to replace one drive unit of each pair by a passive or "dummy" unit merely consisting of a counterweight to balance the weight of the other, active, drive unit. If such balancing is not required (or is provided by other means) the passive unit may be omitted. The total number of drive units may thus be reduced to two or three. Similarly, if the axes (A and B) intersect in or near a drive unit it is possible for two drive units of different pairs to coincide and thus to be combined into a single unit. In this case the total number of drive units is three. The combined drive unit may be a passive or "dummy" unit as explained above.

The coil leads 511 are connected to a schematically depicted current supply or control device 9 which in use produces suitable excitation currents for the drive units. Such currents may for example be of a sinusoidal or sawtooth shape. Electronics to generate these currents and accommodated within the control device 9 are known to persons skilled in the art and are no part of the present invention. The power supply 9 can separately control the coils 51 of drive units 5a,a' and 5b,b' both with respect to frequency and amplitude. Advantageously, the excitation current of the respective drive units of each pair have opposite phases so as to efficiently drive the reflector 2. Although in the embodiment of the figures 1 and 2 the magnets 52 are shown as permanent magnets, electromagnets may also be employed. When electromagnets are used, the excitation currents produced by the control are used, the excitation currents produced by the control device 9 can be advantageously synchronized for optimum interaction of the coils 51 and electromagnets 52. The actual wiring may vary according to the requirements of the device and need not be identical to the wiring shown.

Figure 2 provides a partial side view of the beam steering device 1 of figure 1. In this figure a body or casing member 6, which was omitted from figure 1 for the sake of clarity of the illustration, is shown. This casing member 6 may be connected to the outer frame 32 of the frame assembly 3. Conveniently, the outer frame 32 may be made integral with the body or casing member 6, or with the body or casing of a bar code reader in which the beam steering device is mounted.

In the embodiment of figures 1 and 2 the magnets 52 of the drive units are each mounted on the body member 6 by e.g. a retainer ring 61 fixed by screws or bolts (not shown), while the coil support bodies 510 of the coils 51 of the respective units are fixed to the reflector 2 by glue or suitable mounting means (not shown). It will be understood that the relative positions of the magnets 52 and coils 51 may be exchanged by mounting the coils 51 on the body member 6 and fixing the magnets 52 to the reflector 2, thus providing the advantage of the coils and their coil leads 511 being stationary.

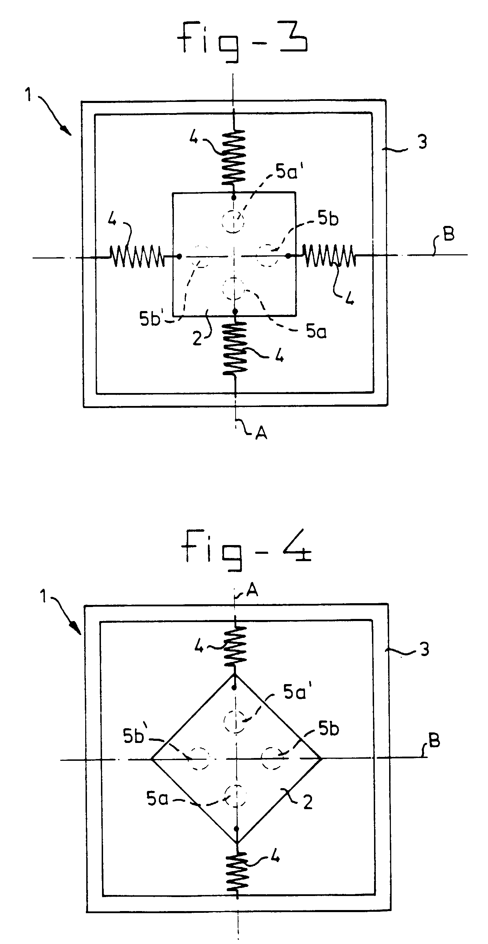

In the embodiment of figure 3 the frame assembly 3 of the inventive beam steering device 1 is constituted by a single frame. The reflector 2 is connected to the frame 3 by means of four elastic support members 4, each attached to, for example, both the centre of each side of the reflector 2 and the centre of each side of the frame 3. The oscillatory behaviour of the reflector 2 depends on a suitable choice of elastic support members 4 having desired resilience characteristics. Preferably, elastic support members 4 are springs that can be easily deformed in the direction normal to the frame 3 and around axes A and B, respectively. As in figure 1 the drive units 5a, 5a' and 5b, 5b' are aligned with the axes A and B, respectively. For the sake of clarity of the illustration, the control device 9 and the coil leads 511 have been omitted from figures 3 and 4.

The beam steering device of figure 4 also comprises a single frame 3 in which the reflector 2 is supported by elastic support members 4. Contrary to the embodiment of figure 3, the reflector 2 shown in figure 4 is supported by only two elastic support members 4, attached to two corners of the reflector. In this embodiment the drive units 5a, 5a' and 5b, 5b', substantially aligned with the first axis A and the second axis B respectively, are located near the corners of the reflector 2. The embodiment of figure 4 provides the advantage of requiring less components.

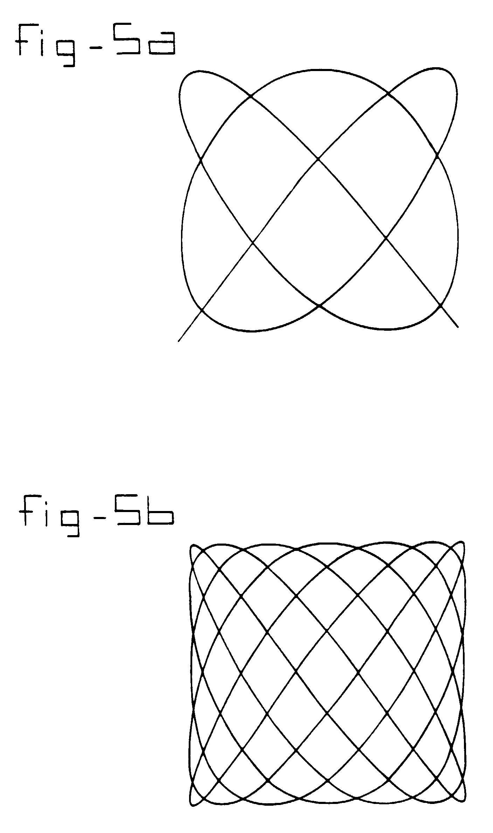

Figure 5a shows by way of example a typical 2-dimensional scanning pattern which may be achieved with the beam steering device of the present invention, while figure 5b shows by way of example another scanning pattern having a higher density than the pattern of figure 5a. The shape and density of these patterns can be chosen by varying the ratio of the oscillation frequencies in the two directions. In figure 5a this ratio is 1.2, while in figure 5b this ratio is 1.4. In both examples the two directions (axes) are orthogonal, while the oscillation amplitudes are identical. It will be understood that other ratios, as well as patterns produced by non-equal amplitudes and non-orthogonal directions, are also feasible.

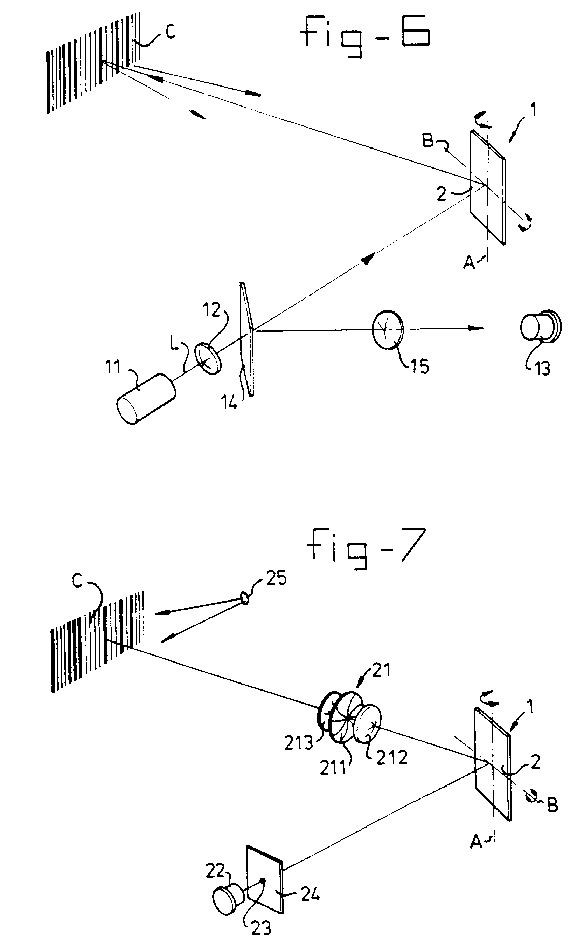

Figure 6 shows schematically, by way of example, an active bar code reader (scanner) in perspective. The scanner comprises a beam steering device 1 (of which for the sake of clarity of the illustration only the reflector 2 is shown), which may be the inventive beam steering device shown in any of the figures 1 through 4 or 8. A laser source 11 produces a laser beam L, which is focused by a focusing means 12. The laser beam L subsequently passes through a deflector 14, which may be a half mirror, and is directed towards a bar code C by the reflector 2 of the beam steering device 1. The backscattered beam is directed by the reflector 2 towards the deflector 14 which deflects the backscattered light and directs it towards a detector 13 through a collector 15.

The passive bar code reader schematically shown in perspective in figure 7 comprises a focusing optics 21, which may, for example, comprise a diaphragm 211 and lenses 212 and 213, for focusing light backscattered by a bar code C. This focused light is directed by the reflector 2 of a beam steering device 1 according to the invention towards an opaque screen 24. The light that passes through an opening 23 in this screen 24 is detected by a detector 22. The detector 22 and screen 24 may be substituted by a sensor array, e.g. a CCD sensor array. In order to provide an adequate amount of light, the reader may further be provided with a light source 25, such as a small light bulb.

In an alternative embodiment of a passive scanner (not shown) the image optics 21 may be situated between the beam steering device 1 and a sensor array, instead of between the beam steering device 1 and the bar code C.

It will be apparent that various modifications can be made in the embodiments described above without departing from the scope of the present invention as defined by the claims.

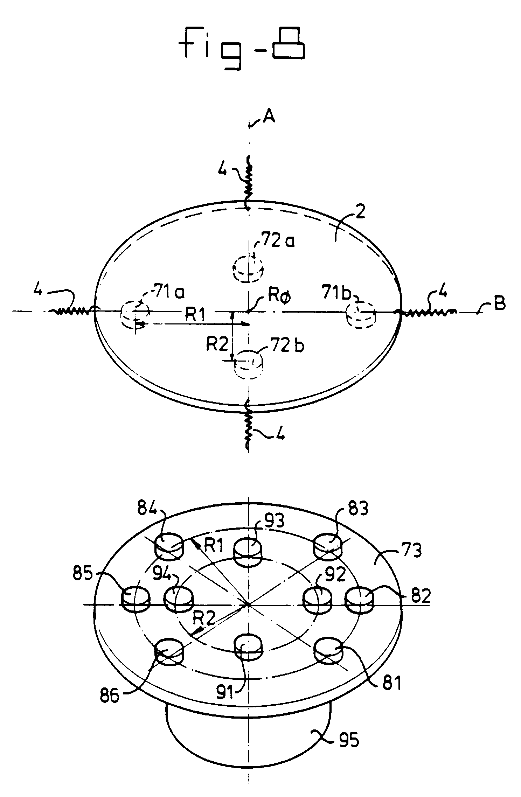

One such alternative embodiment is shown in figure 8, in which drive means of another type are shown.

In the arrangement according to figure 8, four magnets 71a, 71b, 72a, 72b are fixed to the mirror 2 such that two of them 71a, 71b are at a distance R1 from the centre R0 of the disc 2. These two magnets 71a, 71b are aligned with the axis of rotation B. Two other magnets 72a, 72b are fixed to the mirror 2 and aligned with axis A. These two other magnets 72a, 72b are located at a distance R2 from the centre R0 of the disc 2.

To oscillate the mirror 2, there is provided a rotating disc 73. On the disc 73 there are provided two sets of magnets 81, ... 86, and 91, ... 94. The first set of magnets 81 ... 86 are located on the disc 73 at a distance R1 from the centre of the disc 73, whereas the second set of magnets 91 ... 94 are located at a distance R2 from the centre of the disc 73. The poles of the magnets on mirror 2 and on disc 73 are arranged in such a way that attractive and repulsive forces appear periodically as the disc 73 is driven by a motor 95. For instance, there may be an attracting force between magnet 71b and magnet 82, whereas there is a repulsive force between magnet 71a and magnet 85. Therefore, the mirror 2 will be tilted around the axis A. Moreover, there is an attracting force between the magnets 72b and 91, whereas there is a repulsive force between the magnets 72a and 93. As a consequence, the mirror 2 is also tilted around the axis B. Therefore, during rotating disc 73, the mirror 2 will oscillate. The oscillation frequency will depend upon the number of magnets in the two sets of magnets 81 ... 86, 91 ... 94, and the speed of the motor 95. The scanning pattern generated by the embodiment of figure 8 is fixed.

## Claims

1. A bar code reader beam steering device (1) comprising
a reflector (2) for reflection of a bar code reader beam,
a frame assembly (3) arranged to carry said reflector and provided with a first pivotal support (41) supporting pivotal movement of the reflector about a first axis (A) and a second pivotal support (42) supporting pivotal movement of the reflector about a second axis (B),
and driving means (5) for providing oscillatory movement of the reflector about each said axis,
characterised by:
the pivotal supports being constituted by separate connected parts,
and the drive means comprising first and second magnetic drive units (71a,71b,72a,72b) attached to the reflector, the first of the magnetic drive units being located on the said first axis and the second of the magnetic drive units being located on the said second axis,
and in that a control device (9) is arranged to provide a scanning pattern having movement in two directions to include a non-orthogonal direction of movement, whereby a bar code located in an arbitrary position can be scanned by the beam.

2. A bar code reader beam steering device according to claim 1, in which each magnetic drive unit (5a,5a',5b,5b') is part of an electromagnetic driving pair comprising a coil (51) and a magnet (52).

3. A bar code reader beam steering device according to claim 1, wherein said first and second magnetic drive units (71a,71b, 72a,72b), respectively, each consists of a first and a second pair of magnets, respectively, at a back side of said reflector (2), the first pair of magnets (72a,72b) being able to cooperate with a first set of magnets (91...94) attached to a rotatable disc (73) and the second pair of magnets (71a,71b) being arranged to cooperate with a second set of magnets (81...86) attached to said rotatable disc (73).

4. A bar code reader beam steering device according to claim 1, wherein said first axis (A) and said second axis (B) are perpendicular to each other.

5. A bar code reader beam steering device according to claim 1, wherein said frame assembly (3) is constituted by an inner frame (31) and an outer frame (32), the inner frame being movably connected to the reflector (2) by first support members (41) and to the outer frame (32) by second support members (42) so as to allow the inner frame (31) to move relative to the outer frame (32) and the reflector (2) the first support members (41) being on the first axis (A) and the second support members (42) being on the second axis (B).

6. A bar code reader beam steering device according to claim 1, wherein the frame assembly (3) is constituted by a single frame.

7. A bar code reader beam steering device according to claim 1, wherein the pivotal supports (4,41,42) are constituted by elastic elements allowing at least a rotational movement about the longitudinal direction of each element.

8. A bar code reader beam steering device according to claim 5, wherein the pivotal supports (4,41,42) are constituted by rotary bearing elements, allowing at least a rotational movement about the longitudinal axis of each element.

9. A bar code reader beam steering device according to claim 1, wherein the reflector (2) is substantially rectangular, a said pivotal support (4,41,42) being connected to each side of the reflector approximately in the middle thereof.

10. A bar code reader beam steering device according to claim 1, wherein the reflector (2) is substantially rectangular, a said pivotal support (4,41,42) being connected to two opposite corners of the said reflector.

11. A bar code reader beam steering device according to claim 2, further comprising a control device (9) for producing excitation currents for excitation of the drive units (5a,5a',5b,5b').

12. A bar code reader beam steering device according to claim 11, wherein the control device (9) is arranged to produce such excitation currents that the driving movement of one (5a or 5a'; 5b or 5b') of each pair of drive units is opposite to that of the other drive unit of that pair (5a or 5a'; 5b or 5b').

13. Bar code reader comprising a beam steering device according to claim 1, and including a detector (13) and a deflector (14) further comprising a laser source (11) for producing a laser beam (L), and a focusing means (12) for focusing the laser beam, the beam steering device being arranged for steering said laser beam towards a bar code (c) and for reflecting the laser beam backscattered by the bar code towards the said detector (13) via the said detector (14).

14. Bar code reader comprising a beam steering device according to claim 1, further comprising a detector (22), a light source (25) and focusing means (21) for focusing light backscattered by a bar code (c), the beam steering device (1) being arranged for steering said backscattered light towards said detector (22).

## Patentansprüche

1. Strahlablenkungsvorrichtung (1) für einen Strichcodeleser, die folgendes umfaßt:
einen Reflektor (2) zur Reflexion eines Strahls eines Strichcodelesers,
eine Rahmenbaugruppe (3), die so angeordnet ist, daß sie den Reflektor trägt, und mit einer ersten Schwenkstütze (41), die die Schwenkbewegung des Reflektors um eine erste Achse (A) stützt, und mit einer zweiten Schwenkstütze (42), die die Schwenkbewegung des Reflektors um eine zweite Achse (B) stützt, versehen ist,
und Antriebsmittel (5) zum Erzeugen einer oszillierenden Bewegung des Reflektors um jede der Achsen,
dadurch gekennzeichnet,
daß die Schwenkstützen aus einzelnen verbundenen Teilen bestehen
und die Antriebsmittel eine erste und zweite magnetische Antriebseinheit (71a, 71b, 72a, 72b) umfassen, die am Reflektor angebracht sind, wobei sich die erste der magnetischen Antriebseinheiten auf der ersten Achse befindet und sich die zweite der magnetischen Antriebseinheiten auf der zweiten Achse befindet,
und daß eine Steuervorrichtung (9) angeordnet ist, die ein Abtastmuster mit Bewegung in zwei Richtungen einschließlich einer nichtorthogonalen Bewegungsrichtung erzeugt, wodurch ein sich an einer beliebigen Stelle befindlicher Strichcode von dem Strahl abgetastet werden kann.

2. Strahlablenkungsvorrichtung für einen Strichcodeleser nach Anspruch 1, bei der jede magnetische Antriebseinheit (5a, 5a', 5b, 5b') Teil eines elektromagnetischen Antriebspaares ist, das eine Spule (51) und einen Magnet (52) umfaßt.

3. Strahlablenkungsvorrichtung für einen Strichcodeleser nach Anspruch 1, bei der die erste bzw. zweite magnetische Antriebseinheit (71a, 71b, 72a, 72b) jeweils aus einem ersten bzw. einem zweiten Paar von Magneten auf der Rückseite des Reflektors (2) besteht, wobei das erste Paar von Magneten mit einer an einer drehbaren Scheibe (73) montierten ersten Menge von Magneten (81 ... 86) zusammenwirken kann und das zweite Paar von Magneten (71a, 71b) so angeordnet ist, daß es mit einer an der drehbaren Scheibe (73) montierten zweiten Menge von Magneten (91 ... 94) zusammenwirkt.

4. Strahlablenkungsvorrichtung für einen Strichcodeleser nach Anspruch 1, bei der die erste Achse (A) und die zweite Achse (B) senkrecht zueinander verlaufen.

5. Strahlablenkungsvorrichtung für einen Strichcodeleser nach Anspruch 1, bei der die Rahmenbaugruppe (3) aus einem Innenrahmen (31) und einem Außenrahmen (32) besteht, wobei der Innenrahmen beweglich derart durch erste Stützglieder (41) mit dem Reflektor (2) und durch zweite Stützglieder (42) mit dem Außenrahmen verbunden ist, daß sich der Innenrahmen (31) relativ zum Außenrahmen (32) und zum Reflektor (2) bewegen kann, wobei sich die ersten Stützglieder (41) auf der ersten Achse (A) befinden und sich die zweiten Stützglieder (42) auf der zweiten Achse (B) befinden.

6. Strahlablenkungsvorrichtung für einen Strichcodeleser nach Anspruch 1, bei der die Rahmenbaugruppe (3) aus einem einzelnen Rahmen besteht.

7. Strahlablenkungsvorrichtung für einen Strichcodeleser nach Anspruch 1, bei der die Schwenkstützen (4, 41, 42) aus elastischen Elementen bestehen, die mindestens eine Drehbewegung um die Längsrichtung jedes Elements erlauben.

8. Strahlablenkungsvorrichtung für einen Strichcodeleser nach Anspruch 5, bei der die Schwenkstützen (4, 41, 42) aus Drehlagerelementen bestehen, die mindestens eine Drehbewegung um die Längsachse jedes Elements erlauben.

9. Strahlablenkungsvorrichtung für einen Strichcodeleser nach Anspruch 1, bei der der Reflektor im wesentlichen rechteckig ist, wobei eine besagte Schwenkstütze mit jeder Seite des Reflektors ungefähr in dessen Mitte verbunden ist.

10. Strahlablenkungsvorrichtung für einen Strichcodeleser nach Anspruch 1, bei der der Reflektor (2) im wesentlichen rechteckig ist, wobei eine besagte Schwenkstütze (4, 41, 42) mit zwei gegenüberliegenden Ecken des Reflektors verbunden ist.

11. Strahlablenkungsvorrichtung für einen Strichcodeleser nach Anspruch 2, weiterhin mit einer Steuervorrichtung (9) zum Erzeugen von Erregerströmen zur Erregung der Antriebseinheiten (5a, 5a', 5b, 5b').

12. Strahlablenkungsvorrichtung für einen Strichcodeleser nach Anspruch 11, bei der die Steuervorrichtung (9) angeordnet ist, um derartige Erregerströme zu erzeugen, daß die Antriebsbewegung einer Antriebseinheit (5a oder 5a', 5b oder 5b') jedes Paares von Antriebseinheiten der der anderen Antriebseinheit dieses Paares (5a' oder 5a, 5b' oder 5b) entgegengesetzt ist.

13. Strichcodeleser mit einer Strahlablenkungsvorrichtung nach Anspruch 1 und mit einem Detektor (13) und einem Ablenkelement (14), der weiterhin eine Laserquelle (11) zum Erzeugen eines Laserstrahls (L) und ein Fokussiermittel (12) zum Fokussieren des Laserstrahls umfaßt, wobei die Strahlablenkungsvorrichtung so angeordnet ist, daß sie den Laserstrahl in Richtung eines Strichcodes (C) ablenkt und den von dem Strichcode in Richtung des Detektors (13) rückgestreuten Laserstrahl über das Ablenkelement (14) reflektiert.

14. Strichcodeleser mit einer Strahlablenkungsvorrichtung nach Anspruch 1 und weiterhin mit einem Detektor (22), einer Lichtquelle (25) und einem ersten Fokussiermittel (21) zum Fokussieren des von einem Strichcode (C) rückgestreuten Lichts, wobei die Strahlablenkungsvorrichtung (1) so angeordnet ist, daß sie das rückgestreute Licht in Richtung des Detektors (22) ablenkt.

## Revendications

1. Dispositif d'orientation de faisceau (1) pour lecteur de code à barres comprenant
un réflecteur (2) pour la réflexion d'un faisceau de lecteur de code à barres
un assemblage de cadre (3) disposé pour porter ledit réflecteur, et pourvu d'un premier support pivotant (41) supportant le mouvement pivotant du réflecteur autour d'un premier axe (A), et d'un deuxième support pivotant (42) supportant le mouvement pivotant du réflecteur autour d'un deuxième axe (B),
un moyen d'entraînement (5) pour fournir un mouvement oscillant du réflecteur autour de chaque dit axe,
caractérisé en ce que:
les supports pivotants sont constitués de parties connectées séparées
et le moyen d'entraînement comprend des première et deuxième unités d'entraînement magnétiques (71a, 71b, 72a, 72b) attachées au réflecteur, la première des unités d'entraînement magnétiques étant située sur ledit premier axe, et la deuxième des unités d'entraînement magnétiques étant située sur ledit deuxième axe,
et en ce qu'un dispositif de commande (9) est disposé pour fournir un motif de balayage ayant un mouvement dans deux directions, pour inclure une direction de mouvement non orthogonale, ce par quoi un code à barres situé dans une position arbitraire peut être balayé par le faisceau.

2. Dispositif d'orientation de faisceau pour lecteur de code à barres selon la revendication 1, dans lequel chaque unité d'entraînement magnétique (5a, 5a', 5b, 5b') fait partie d'une paire d'entraînement électromagnétique comprenant une bobine (51) et un aimant (52).

3. Dispositif d'orientation de faisceau pour lecteur de code à barres selon la revendication 1, dans lequel lesdites première et deuxième unités d'entraînement magnétiques (71a, 71b, 72a, 72b), respectivement, sont chacune constituées d'une première et d'une deuxième paires d'aimants, respectivement, au dos dudit réflecteur (2), la première paire d'aimants pouvant coopérer avec un premier jeu d'aimants (81...86) attachés à un disque rotatif (73), et la deuxième paire d'aimants (71a, 71b) étant disposée pour coopérer avec un deuxième jeu d'aimants (91...94) attachés audit disque rotatif (73).

4. Dispositif d'orientation de faisceau pour lecteur de code à barres selon la revendication 1, dans lequel ledit premier axe (A) et ledit deuxième axe (B) sont perpendiculaires l'un à l'autre.

5. Dispositif d'orientation de faisceau pour lecteur de code à barres selon la revendication 1, dans lequel ledit assemblage de cadre (3) est constitué d'un cadre intérieur (31) et d'un cadre extérieur (32), le cadre intérieur étant connecté de manière mobile au réflecteur (2) par des premiers organes de support (41) et au cadre extérieur par des deuxièmes organes de support (42), de façon à permettre le déplacement du cadre intérieur (31) par rapport au cadre extérieur (32) et au réflecteur (2), les premiers organes de support (41) se trouvant sur le premier axe (A), et les deuxièmes organes de support (42) se trouvant sur le deuxième axe (B).

6. Dispositif d'orientation de faisceau pour lecteur de code à barres selon la revendication 1, dans lequel l'assemblage de cadre (3) est constitué d'un seul cadre.

7. Dispositif d'orientation de faisceau pour lecteur de code à barres selon la revendication 1, dans lequel les supports pivotants (4, 41, 42) sont constitués d'éléments élastiques permettant au moins un mouvement de rotation autour de la direction longitudinale de chaque élément.

8. Dispositif d'orientation de faisceau pour lecteur de code à barres selon la revendication 5, dans lequel les supports pivotants (4, 41, 42) sont constitués d'éléments d'appui rotatifs, permettant au moins un mouvement de rotation autour de l'axe longitudinal de chaque élément.

9. Dispositif d'orientation de faisceau pour lecteur de code à barres selon la revendication 1, dans lequel le réflecteur est substantiellement rectangulaire, undit support pivotant étant connecté à chaque côté du réflecteur, approximativement en leur milieu.

10. Dispositif d'orientation de faisceau pour lecteur de code à barres selon la revendication 1, dans lequel le réflecteur (2) est substantiellement rectangulaire, undit support pivotant (4, 41, 42) étant connecté à deux coins opposés dudit réflecteur.

11. Dispositif d'orientation de faisceau pour lecteur de code à barres selon la revendication 2, comprenant en outre un dispositif de commande (9) pour produire des courants d'excitation en vue de l'excitation des unités d'entraînement (5a, 5a', 5b, 5b').

12. Dispositif d'orientation de faisceau pour lecteur de code à barres selon la revendication 11, dans lequel le dispositif de commande (9) est disposé pour produire des courants d'excitation tels que le mouvement d'entraînement de l'une (5a ou 5a', 5b ou 5b') de chaque paire d'unités d'entraînement soit opposé à celui de l'autre unité d'entraînement de cette paire (5a' ou 5a, 5b' ou 5b).

13. Lecteur de code à barres comprenant un dispositif d'orientation de faisceau selon la revendication 1, et comportant un détecteur (13) et un déflecteur (14) comprenant en outre une source laser (11) pour produire un faisceau laser (L), et un moyen de focalisation (12) pour focaliser le faisceau laser, le dispositif d'orientation de faisceau étant disposé pour orienter ledit faisceau laser vers un code à barres (C) et pour réfléchir le faisceau laser rétrodiffusé par le code à barres vers ledit détecteur (13), par le biais dudit déflecteur (14).

14. Lecteur de code à barres comprenant un dispositif d'orientation de faisceau selon la revendication 1, et comportant en outre un détecteur (22), une source de lumière (25) et un premier moyen de focalisation (21) pour focaliser la lumière rétrodiffusée par un code à barres (C), le dispositif d'orientation de faisceau (1) étant disposé pour orienter ladite lumière rétrodiffusée vers ledit détecteur (22).
